# DEMANDE DE BREVET EUROPEEN

(11) **EP 3 763 489 A1**
(43) Date de publication de la demande: **13.01.2021**
(21) Numéro de dépôt: 20183716.8
(22) Date de dépôt: 02.07.2020
(51) Int. Cl.: B25J 5/00, B25J 15/02, B25J 11/00, B25J 9/00, B25J 19/00, B25J 9/10

(54) **DISPOSITIF POUR DÉPLACER DES OBJETS**

(30) Priorité: 09.07.2019 FR 1907648
(71) Demandeur: Instar Robotics, 95015 Cergy Cedex (FR)
(72) Inventeur: JAUFFRET, Adrien, 95800 Cercy (FR); OECONOMOS, Alexandre, 78700 Conflans Sainte Honorine (FR); SCHOEMAEKER, Nicolas, 94100 Saint Maur des Fosses (FR); DELARBOULAS, Pierre, 60240 Boubiers (FR)
(74) Mandataire: IPAZ

(57) **Abrégé**

L'invention concerne un dispositif pour déplacer des objets disposés au sol, en particulier des pots (60) pouvant contenir des plantes, ledit dispositif comportant : des bras de préhension (4), pour saisir un objet (60), qui sont mobiles entre une position rapprochée pour saisir l'objet (60) latéralement et une position écartée pour libérer ledit objet (60), un magasin (5) dans lequel ledit pot (60) saisi est stocké, des roues (2) pour assurer le déplacement dudit dispositif, un module de détection (3) assurant notamment la détection d'un pot (60) à saisir au sol. Le dispositif est remarquable en ce que les bras de préhension (4) sont montés mobiles en déplacement le long d'un arbre principal (8) sensiblement horizontal, entre ladite position rapprochée et ladite position écartée, et en ce que ledit arbre principal (8) est également monté mobile en rotation autour de son axe pour permettre un mouvement de pivot desdits bras de préhension (4) entre une première position pour saisir ledit objet (60) au sol et une second position pour déposer ledit objet (60) dans ledit magasin (5), ledit arbre principal (8) et lesdits bras de préhension (4) étant montés solidaires en rotation.

## Description

L'invention a trait au déplacement d'objets et en particulier aux dispositifs tels que des robots qui sont conçus pour déplacer des objets d'un premier endroit à un second endroit.

Elle concerne en particulier les dispositifs qui assurent le déplacement des pots comprenant des plantes, par exemple d'un endroit abrité à un endroit extérieur, pour assurer un bon développement de la plante ou pour, par exemple, faire de la place à d'autres pots comportant de nouvelles plantes.

Il peut être également nécessaire de passer d'un ensemble de pots resserrés à un ensemble de pots régulièrement espacés pour que les plantes bénéficient de plus de soleil, ou inversement.

Une telle technologie est usuellement utilisée dans les pépinières, de manière que l'homme soit remplacé pour la réalisation de tâches pénibles suivant lesquelles l'homme doit se baisser et porter des pots.

On connait du document US 2014/0363264 un dispositif (robot) équipé d'un système de préhension pour saisir un objet au sol, tel qu'un pot de fleur, pour le positionner sur un magasin dont il est équipé pour le déplacer d'un endroit à un autre.

Le système de préhension comporte deux bras montés pivotants (mobiles) entre une position rapprochée pour saisir l'objet latéralement et une position écartée pour libérer ledit objet. Le système de préhension comporte également un élément mobile portant les deux bras qui permet de déplacer les bras devant le dispositif et de les ramener sur le dispositif, en position au-dessus du magasin. Cet élément mobile du système de préhension assure ainsi le déplacement du pot de sa première position au sol jusqu'au magasin du dispositif et du magasin du dispositif jusqu'à une seconde position au sol.

Cette technologie permet de remplacer un homme pour déplacer un pot. Néanmoins, il ne permet pas de déplacer plusieurs pots à la fois, ni de déplacer des pots de toute taille : en effet, les bras du système de préhension présentent des dimensions et un écartement maximum adaptés à une taille de pot prédéterminée. Pour changer de taille de pots, il est nécessaire de régler manuellement l'écartement des bras. De plus, le magasin ne permet de ne porter qu'un seul pot à la fois.

L'invention vise à offrir une alternative qui permet de déplacer des pots de taille variable sans réglage particulier des bras.

Elle propose à cet effet un dispositif pour déplacer des objets disposés au sol, en particulier des pots pouvant contenir des plantes,
ledit dispositif comportant :
- des bras de préhension, pour saisir un objet, qui sont mobiles entre une position rapprochée pour saisir l'objet latéralement et une position écartée pour libérer ledit objet,
- un magasin dans lequel ledit pot saisi est stocké,
- des roues pour assurer le déplacement dudit dispositif,
- un module de détection assurant notamment la détection d'un pot à saisir au sol.
Le dispositif conforme à l'invention est remarquable en ce que les bras de préhension sont montés mobiles en déplacement le long d'un arbre principal sensiblement horizontal, entre ladite position rapprochée et ladite position écartée, et en ce que ledit arbre principal est également monté mobile en rotation autour de son axe pour permettre un mouvement de pivot desdits bras de préhension entre une première position pour saisir un objet au sol et une seconde position pour déposer l'objet dans ledit magasin, ledit arbre principal et lesdits bras de préhension étant montés solidaires en rotation.

Ainsi réalisé, le dispositif est un type de robot qui comporte deux bras de préhension symétriques permettant de saisir un pot au sol devant le robot indépendamment de ses dimensions puisque l'écartement des bras s'adaptent à la taille du pot grâce au déplacement des bras sur l'arbre principal (les pots peuvent avoir une contenance de 2 L à 10 L).

L'invention peut également comporter les caractéristiques suivantes, prises séparément ou en combinaison :
- L'arbre principal est cannelé et chacun desdits bras de préhension comprend un manchon présentant une forme interne cannelée complémentaire à celle dudit arbre cannelé, le manchon étant emmanché sur ledit arbre principal cannelé. L'arbre cannelé permet de transmettre un couple important tout en autorisant un glissement axial.
   L'arbre va de pair avec le manchon d'accouplement conçu pour glisser le long de l'axe de l'arbre, tout en transmettant le couple en rotation. L'assemblage des deux pièces constitue une liaison glissante mais non pivotante et il permet de transmettre un couple aux bras de préhension lors de la rotation (levage du pot) tout en autorisant le glissement du bras de préhension selon l'axe de l'arbre principal ;
- chacun des bras de préhension comporte un système à pantographe comprenant une première pièce qui est coudée à chacune de ses extrémités, sensiblement en forme de U, et une seconde pièce qui est coudée à chacune de ses extrémités, sensiblement en forme de U. De plus, les première et seconde pièces coudées sont orientées de manière à définir les contours d'un polygone. Enfin, une extrémité coudée de la première pièce est montée pivotante autour de l'axe dudit arbre principal et l'autre extrémité coudée de ladite première pièce est montée pivotante sur un élément de saisie d'un objet.
   Ces caractéristiques permettent la montée et descente d'un pot par pivot - translation circulaire : le mouvement créé ainsi est analogue à la nacelle d'une grande roue d'un manège lors de la rotation des bras de préhension : la conception permet un grand angle de rotation des bras de préhension grâce notamment à la forme spécifique en U (cette forme contribue à accroitre le débattement angulaire en passant de 90° à 180°). Grâce à cette grande rotation, l'on peut prévoir un magasin derrière le système de préhension : on dispose ainsi de plus d'espace pour stocker les pots sur le dispositif ;
- Le dispositif conforme à l'invention comporte un second arbre tubulaire. De plus, une extrémité coudée de la seconde pièce est montée pivotante autour de l'axe dudit second arbre tubulaire et l'autre extrémité de la seconde pièce est montée pivotante sur ledit élément de saisie d'un objet. On peut avantageusement prévoir des manchons lisses pour assurer la liaison pivot et pour assurer la translation des bras de préhension sur le second arbre tubulaire. L'axe de l'arbre tubulaire est avantageusement parallèle à celui de l'arbre principal : l'arbre tubulaire assure le bon parallélisme des bras et permet de fixer un des axes de rotation du polygone déformable au châssis. Ce mode de réalisation permet le maintien des pots dans la même orientation pendant la translation circulaire (phase de montée ou de descente des pots) de façon purement mécanique : l'invention ne nécessite dont ni effecteurs ni capteurs ;
- L'arbre principal et le second arbre tubulaire sont entourés chacun d'au moins un soufflet de protection. Les soufflets sont en accordéon, réalisés de préférence en caoutchouc souple emmanchés autour des arbres principal et tubulaire. Ils sont prévus pour se compresser axialement et suivre ainsi le mouvement axial des bras lors du serrage et du desserrage ;
- Le dispositif conforme à l'invention comporte un système à pignon et double crémaillère relié aux bras de préhension au moyen de plaques coudées pour entrainer en déplacement lesdits bras de préhension sur ledit arbre principal de leur position rapprochée à leur position écartée. Avec tel mode de réalisation, les deux crémaillères, montées l'une au-dessus et l'autre en-dessous d'un pignon, se déplacent de façon synchronisée horizontalement. On peut également prévoir un système de tendeur par galet pour contraindre chaque crémaillère sur le pignon ;
- les plaques coudées sont fixées aux extrémités coudées des bras de préhension au moyen de deux bagues de serrage, de sorte que chaque plaque coudée soit prise en sandwich entre deux extrémités coudées de bras de préhension et deux bagues de serrage. De plus, pour chaque bras de préhension, deux butées à rouleaux sont comprimées entre respectivement une extrémité coudée des bras de préhension et une plaque coudée, d'une part, et une plaque coudée et une bague de serrage d'autre part. Ce mode de réalisation permet de maintenir les pièces coudées parallèles aux bras et d'éviter tout blocage par arc-boutement (de type serre-joint) ;
- ledit magasin du dispositif comporte un plateau rond, monté rotatif autour de son axe, ledit plateau comportant au moins deux encoches radiales. On peut ainsi stocker plusieurs pots sur le dispositif, les pots étant maintenus droits, suspendus par leur collerette. Il peut être prévu que les encoches soient déformables, pour que les pots y soient clipsés en étant engagés à force légèrement ou que les pots soient légèrement déformables pour ce faire.
- le magasin peut comporter en outre un garde-corps au moins partiellement annulaire, entourant ledit plateau rond, ledit garde-corps présentant une partie tronquée positionnée au-dessus des bras de préhension du dispositif pour permettre le mouvement de pivot desdits bras de préhension. Dans ce cas, le magasin fonctionnera de concert avec les bras pour présenter une encoche vide lors de la saisi d'un nouveau pot ou bien mettre à disposition un pot en stock lors de la dépose d'un pot au sol. Le garde-fou assure un maintien des pots dans les encoches du plateau lors du déplacement : cela assure une stabilité des pots, car les pots sont soumis à des vibrations lors des déplacements et à des inclinaisons d'assiette sur un sol accidenté ou incliné. On prévoit de fixer le garde-corps au châssis du dispositif. Le garde-corps définit une frontière physique autour du plateau du magasin : en cas de collision du dispositif avec un objet tiers, les pots sont protégés et maintenus dans les encoches. Il protège également le plateau rotatif quand le plateau est vide ;
- enfin, le plateau peut être amovible et comporter au moins trois encoches radiales, uniformément réparties autour de l'axe dudit plateau. Le plateau peut ainsi être remplacé par plusieurs variantes, pour transporter jusqu'à, par exemple, six pots. Les encoches de la plateforme encerclent solidement les pots en les suspendant par la collerette. Le plateau peut reposer sur un support fixé à un arbre de transmission d'un moteur, pour assurer la rotation du plateau. Le Plateau peut également être maintenu sur le support par trois vis : il est ainsi aisément amovible en dévissant et revissant (système vis/ écrou).

Comme il sera vu dans le mode de réalisation présenté par la suite, la fonction de serrage n'est pas séparée de la fonction de calibrage du pot : pour ce faire, le dispositif pourrait comprendre un capteur de télémétrie rotatif de type LIDAR (Light Détection And Ranging) pour détecter et reconnaitre le pot à saisir (mesure de la forme, diamètre, distance, angle de positionnement du pot vis-à-vis du dispositif). Cette mesure, couplée à une calibration des bras, permet d'adapter automatiquement le serrage à toute taille de pot de 2 L à 10 L. Ainsi, lors de la saisie du pot, le système écartera plus ou moins les bras, et de façon autonome, en fonction du diamètre du pot détecté par le LIDAR. Ce système permet également de détecter un pot ne correspondant pas aux pots à déplacer pour la tâche en cours.

Par ailleurs, le dispositif conforme à l'invention permet de soulever le pot à une hauteur d'environ 50 cm du sol sans modifier son orientation, pour venir le stocker dans le magasin du dispositif situé derrière le système de préhension.

Enfin, la solution de l'invention est moins coûteuse que les solutions du marché actuel. Elle est également facile à mettre en oeuvre : en effet, la solution minimise le nombre d'effecteurs nécessaires au fonctionnement du dispositif. Les fonctions de serrage, de levage, d'adaptation à la taille du pot et du maintien de l'orientation du pot pendant le chargement sont toutes réalisées en ne mettant en œuvre que deux moteurs.

Pour pouvoir être exécutée, l'invention est exposée de façon suffisamment claire et complète dans la description suivante qui est, en plus, accompagnée de dessins dans lesquels :
[Fig. 1] est une vue en perspective d'un dispositif conforme à l'invention,
[Fig. 2] est une vue en perspective d'une partie avant du dispositif montré en figure 1,
[Fig. 3] est une vue en perspective d'un arbre cannelé et de son système d'entrainement en rotation, compris dans le dispositif montré en figure 1,
[Fig. 4] est une vue en perspective d'une partie avant du dispositif montré en figure 1, illustrant des bras du dispositif en position écartée,
[Fig. 5] est une vue en perspective d'une partie avant du dispositif montré en figure 1, illustrant des bras du dispositif en position rapprochée,
[Fig. 6] est une vue de côté d'un bras droit montré en position haute,
[Fig. 7] est une vue de côté du bras droit montré en figure 6, illustré en position basse,
[Fig. 8] est une vue en perspective et partiellement éclatée d'un bras gauche,
[Fig. 9] est une vue de face d'un système à double crémaillère que comporte le dispositif conforme à l'invention montré en figure 1,
[Fig. 10] est une vue en perspective d'un magasin et d'un garde-corps que comporte le dispositif montré en figure 1,
[Fig. 11] est une vue en perspective d'une première variante de magasin,
[Fig. 12] est une vue en perspective d'une seconde variante de magasin.

Dans la description qui suit, les termes « inférieur », « supérieur », « haut », « bas » etc... sont utilisés en référence aux dessins pour une plus grande facilité de compréhension. Ils ne doivent pas être compris comme étant des limitations de la portée de l'invention.

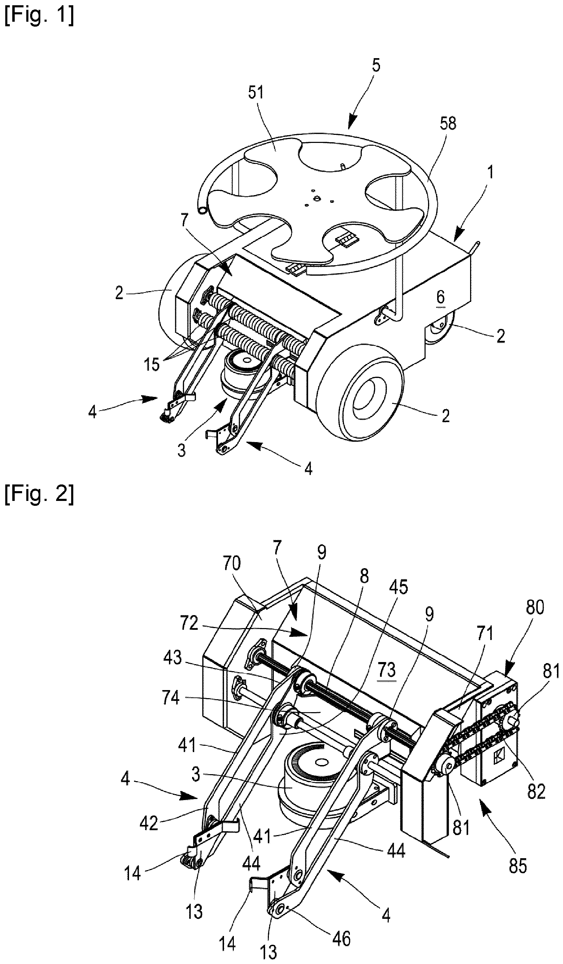

Un dispositif conforme à l'invention est illustré en figure 1 : il s'agit d'un robot qui permet de déplacer des pots de fleurs d'un endroit à un autre pour remplacer le travail d'un homme (qui aurait à se baisser et à porter le pot de fleurs pour le déplacer).

Le dispositif comporte un châssis 1 monté mobile sur des roues 2.

Le dispositif comporte quatre roues 2 : deux roues motrices à l'avant et deux roues libres à l'arrière. Les roues 2 sont pneumatiques et soutenues par un châssis en métal.

Le dispositif conforme à l'invention comporte en outre un module de commande permettant de le faire se déplacer seul. Le module de commande du dispositif ne sera pas décrit dans le présent document, car l'homme du métier connait et sait mettre en œuvre de tels modules de commande. Ces modules sont protégés par un carter de protection 6 qui ferme entièrement l'espace défini par le châssis en métal du dispositif.

Les deux roues 2 avant motrices sont situées de part et d'autre du châssis 1 tandis que les roues 2 arrières libres sont prévues sous le châssis 1 en partie arrière.

La châssis 1 et le carter de protection forment, en partie avant du dispositif entre les deux roues avant 2, un espace creux 7.

Le dispositif comporte également un module 3 de détection d'objets qui est prévu en partie inférieure de l'espace en creux 7. : le module 3 est positionné en partie avant du dispositif, devant le châssis 1. Il comporte un capteur de type « LIDAR » (Light Détection and Ranging) qui permet de détecter et de reconnaitre un pot à saisir : ce type de capteur permet de mesurer le pot, de déterminer sa forme, la distance à laquelle il se trouve par rapport au dispositif et l'angle suivant le pot se présente par rapport au dispositif.

Le capteur LIDAR permet ainsi de détecter si le pot qui se présente à proximité du dispositif est conforme ou non aux pots que le dispositif doit ramasser et déplacer d'un endroit à un autre : si le pot ne correspond pas au pot indiqué au module de commande, le dispositif ne le prendra pas en considération et cherchera un pot à proximité pour l'analyser et éventuellement le charger pour le déplacer.

On comprendra ainsi que le dispositif conforme à l'invention doit être au préalable renseigné sur certaines caractéristiques des pots que l'on souhaite déplacer. Ces renseignements peuvent être communiqués au module de commande du dispositif via tout moyen connu : via une application qui communique avec le dispositif, directement sur le dispositif (par exemple en utilisant une interface Homme/machine) etc.

Conformément à l'invention, le dispositif comporte également des bras de préhension 4 pour saisir un pot de fleurs.

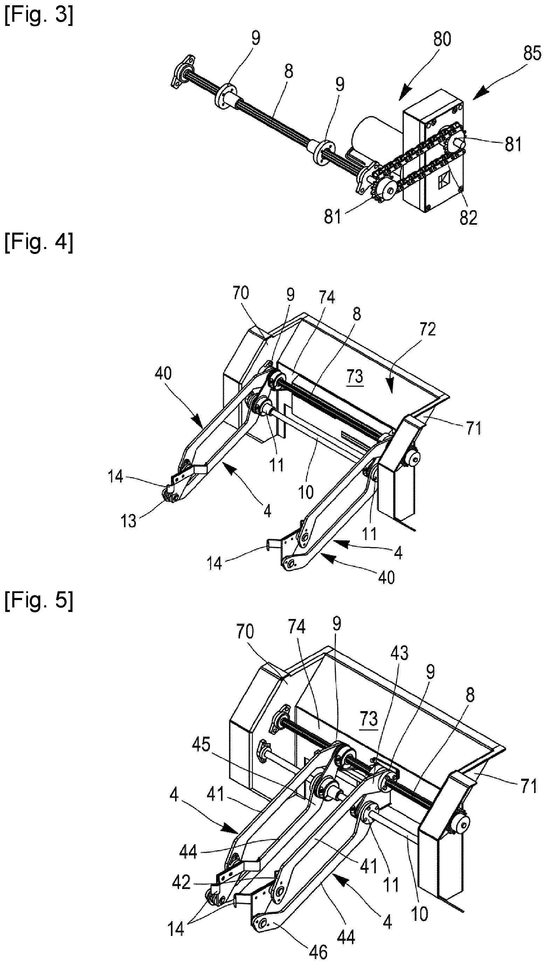

Les bras de préhension 4 sont mobiles entre :
- une position rapprochée, suivant laquelle ils peuvent saisir le pot latéralement par pression radiale (position illustrée par exemple en figure 5),
- et une position écartée permettant de libérer le pot en cessant d'exercer ladite pression radiale (position illustrée par exemple en figure 4).

Les bras de préhension 4 sont prévus en partie avant du dispositif, au voisinage du module 3 dans l'espace en creux 7.

Le dispositif comporte également un magasin 5, sur lequel le pot de fleurs saisi par les bras 4 est stocké pour être déplacé d'un endroit à un autre.

Le magasin 5 est positionné au-dessus du carter de protection 6, derrière l'espace en creux 7 accueillant les bras de préhension 4.

Dans la description qui va suivre, il va être fait plus particulièrement référence aux bras 4, à leur mode de réalisation et à leur mode de fonctionnement, en faisant référence aux figures 2 à 9.

La figure 2 illustre la partie en creux 7 située en avant du dispositif : elle comporte deux parois latérales 70 et 71 et une paroi de fond 72 présentant un pan incliné supérieur 73 qui se prolonge vers le bas par une paroi verticale inférieure 74.

Conformément à l'invention, les bras 4 sont montés mobiles en déplacement le long d'un arbre principal 8, sensiblement horizontal, entre la position rapprochée et la position écartée évoquée ci avant.

L'arbre 8 est monté entre les deux parois latérales 70 et 71 et il est monté mobile en rotation autour de son axe.

Le mouvement de translation des bras se fait grâce à la présence de manchons 9 fixés aux bras 4 et emmanchés autour de l'arbre 8 : les manchons peuvent glisser le long de l'arbre 8 dans un sens ou dans un autre suivant une direction parallèle à l'axe de l'arbre 8.

Pour entrainer en rotation les manchons autour de l'axe de l'arbre, il est prévu que le manchon 9 et l'arbre 8 soit réalisés solidaires en rotation : cela est possible si le manchon et l'arbre comporte des formes complémentaires formant des butées radiales.

Comme on peut le voir en particulier sur la figure 3, dans le cadre de ce mode de réalisation, l'arbre 8 est un arbre cannelé et les manchons 9 comportent chacun une forme intérieure complémentaire de la forme cannelée de l'arbre 8 : ainsi, les cannelures de l'arbre 8 servent de rails de guidage pour assurer la translation des bras sur l'arbre 8, d'une part. D'autre part, la forme interne des manchons associée à la forme des cannelures assurent une rotation des manchons autour de l'axe de l'arbre 8 quand l'arbre 8 est entrainé en rotation.

L'arbre 8 est entrainé en rotation grâce à un bloc moteur de levage 85 qui comporte un moteur 80, deux pignons 81 et d'une chaine à rouleaux 82, ces derniers assurant la transmission du couple du moteur de levage jusqu'à l'arbre cannelé.

Le bloc de levage 85 est montré également en figure 2 où il apparait placé partiellement derrière la paroi latérale 71 et partiellement à l'arrière de la paroi avant du carter 6 du dispositif.

Grâce à ce montage, les bras 4 peuvent s'écarter l'un de l'autre ou se rapprocher (et inversement) et pivoter autour de l'axe de l'arbre 8 entre une position haute et une position basse (et inversement). Les bras peuvent ainsi saisir et soulever des pots de tailles variables car l'écartement des bras s'adapte aux diamètres des pots.

Les figures 2 et 4 montrent que le dispositif comporte en outre un second arbre 10 tubulaire, non cannelé, autour duquel sont emmanchés deux autres manchons lisses 11, dont leur diamètre leur permet de glisser le long du second arbre 10.

Le second arbre 10 tubulaire n'est pas entrainé en rotation, mais les manchons 11 peuvent tourner autour du second arbre tubulaire 10.

Ce second arbre 10 tubulaire assure un bon parallélisme des bras 4 qui vont maintenant être détaillés.

Les bras 4 sont réalisés symétriques et comportent chacun un système à pantographe 40.

Chaque système à pantographe comprend deux pièces en forme de U : une première pièce présentant une partie centrale longue 41 et deux extrémités coudées 42 et 43 et une seconde pièce identique présentant une partie centrale longue 44 placée parallèlement à la partie centrale longue 41 de la première pièce et deux extrémités coudées 45 et 46 qui sont placées parallèles respectivement aux extrémités coudées.

Les deux pièces en forme de U allongées sont ainsi orientées de manière à former sensiblement un hexagone.

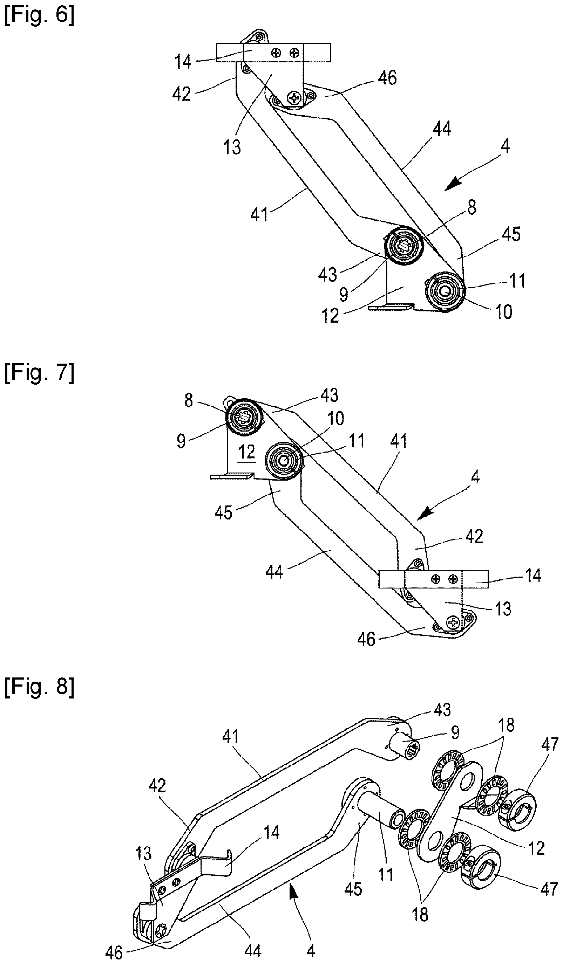

Les figures 6 et 7 montrent plus particulièrement le montage du bras droit 4.

La figure 8 donne des détails de montage du bras gauche, symétrique au bras droit.

L'extrémité coudée 43 est fixée autour du manchon cannelé 9 (voir figure 8) : l'extrémité coudée 43 du bras supérieur est ainsi pivotant autour de l'axe de l'arbre cannelé 8 quand l'arbre 8 est entrainé en rotation.

L'extrémité 45 inférieure du bras qui se trouve à proximité de la paroi verticale 74 est fixé autour du manchon lisse 11.

Les manchons 9 et 11 sont également montés pivotants sur une plaque coudée 12, dont l'utilité sera expliquée plus loin.

Les autres extrémités 42 et 46 des première et seconde pièces en forme de U allongées sont, elles, montées pivotantes sur une plaque 13 de forme sensiblement triangulaire, portant un élément concave de préhension 14 (encore appelé élément de saisie). Ce dernier élément concave de préhension 14 est celui qui a pour fonction la saisie (ou la préhension) du pot.

L'élément concave de préhension 14 présente une bande centrale droite et deux bandes d'extrémité inclinées par rapport à la partie centrale droite. Les extrémités des bandes inclinées sont recourbées.

Le système de pantographe ainsi réalisé permet :
- que les extrémités coudées 43 et 45 des première et seconde pièces soient montées pivotantes autour des axes des arbres 8 et 10, et
- que les extrémités 42 et 46 des première et seconde pièces soient montées pivotantes sur un élément (références 13 et 14) assurant la saisie (la préhension) du pot.

Cet agencement permet un mouvement de l'élément de préhension 14 analogue à celui d'une nacelle de grande roue : en effet, quand les éléments du pantographe pivotent autour des axes des arbres 8 et 10, l'élément de préhension reste toujours orienté de la même façon.

Ainsi, grâce à cet agencement, les bras peuvent saisir des pots et les déplacer sans en changer l'orientation : les pots ne se renversent pas.

La figure 6 montre le bras droit en position haute et la figure 7 montre le bras droit en position basse. On constate que les éléments de préhension 14 peuvent effectuer une rotation autour des arbres 8 et 10 sur un angle de 180 ° tout en restant bien droit.

Cela permet de saisir un pot à terre et de le déplacer jusqu'à une position qui se trouve au-dessus du châssis 1 du dispositif.

La forme spécifique en U et l'orientation des deux pièces allongées l'une par rapport à l'autre permet d'accroitre un débattement angulaire du parallélogramme déformable (pantographe) en passant de 90° à 180°.

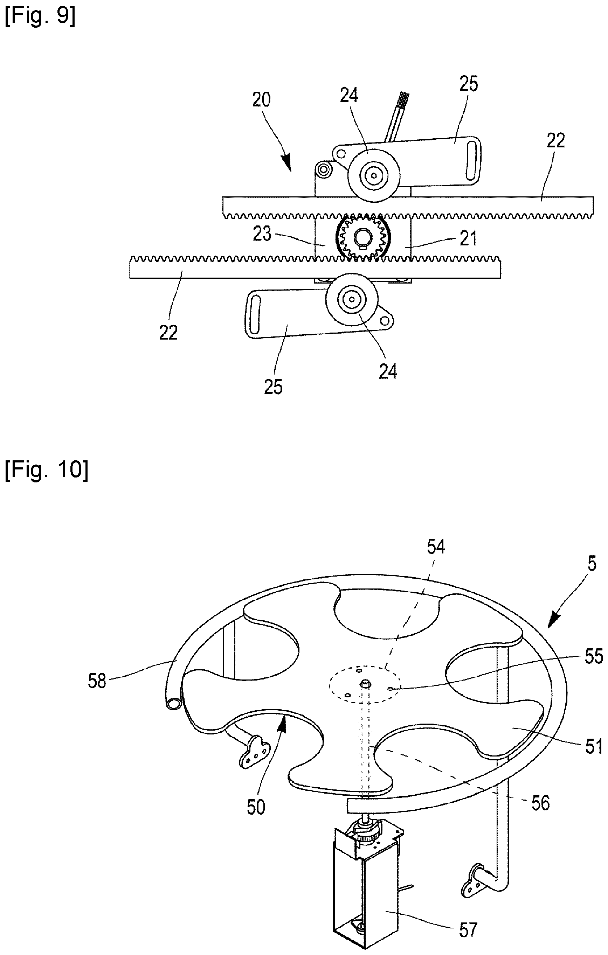

Le mouvement assurant la saisie du pot par les bras 4 est assuré grâce à la présence d'un système 20 à pignon 21 et double crémaillère 22, illustré en figure 9.

Le système 20 à pignon 21 et double crémaillère est Caché par une paroi de protection qui se fixe sur la paroi 74.

Les deux crémaillères 22 montées l'une au-dessus du pignon 21 et l'autre en-dessous du pignon 21 se déplacent horizontalement et sont actionnées simultanément.

Le pignon 21 est fixé sur l'arbre de sortie d'un moteur de serrage 23.

On prévoit un système de tendeurs par galets 24 qui permet de contraindre chaque crémaillère 22 sur le pignon 21.

On remarque également des pièces 25 associées aux galets 24 qui permettent leur réglage.

Les bras 4 sont associés aux crémaillères 22 grâce aux plaques coudées 12 évoquées précédemment, sur lesquelles sont assemblées les extrémités coudées 43 et 45 des première et seconde pièce en U allongées et les manchons 9 et 11.

Pour assurer un serrage et éviter un arc-boutement des plaques coudées 12 (qui pourrait conduire à un blocage), on prévoit des bagues de serrage 47 (voir figure 8).

Les plaques coudées 12 ont pour fonction de transmettre la force latérale exercée par les crémaillères aux bras 4 pour qu'ils puissent passer de leur position écartée à leur position rapprochée ou inversement. En parallèle, les plaques coudées 12 doivent autoriser la rotation des bras lors de la levée ou de la descente du pot saisi par les bras 4. Pour assurer la rotation du bras, on prévoit des butées à rouleaux 18, prise en sandwich entre :
- les extrémités coudées 43 et 45 des bras et la plaque coudée 12, d'une part,
- la plaque coudée 12 et les bagues de serrage 47, d'autre part.

Ainsi assemblées, le coude des plaques coudées 12 restent perpendiculaires aux extrémités des bras 4.

On comprend de la description qui précède comment le dispositif peut saisir un pot, le libérer, le prendre au sol et le charger dans le magasin 5 situé au-dessus du châssis 1, derrière l'espace en creux 7 du dispositif.

L'exemple montre également que le dispositif peut être équipé de soufflets de protection 15 qui sont emmanchés autour des arbres 8 et 10.

Les soufflets de protection 15 sont des manchons en forme d'accordéon, réalisés par exemple en caoutchouc souple. Ils se compressent axialement pour suivre le bras lors du serrage ou du desserrage des pots.

Les soufflets de protection 15 protègent l'arbre tubulaire et l'arbre cannelé de la poussière et de l'humidité.

Il va maintenant être fait référence au magasin 5 du dispositif conforme à l'invention.

Contrairement aux magasins des dispositifs de l'état de la technique, le magasin 5 peut recevoir plusieurs pots : en effet, l'espace dédiée au stockage des pots est plus important sur le dispositif que les espaces dédiés au stockage des pots dans les solutions connues, car il est situé au-dessus du châssis au lieu d'être ménagé dans le châssis.

Cela est rendu possible grâce à la conception des bras du dispositif qui peuvent amener les pots derrière la zone dans laquelle les pots sont saisis (c'est-à-dire sensiblement dans l'espace en creux 7).

Le magasin 5 peut accueillir de 3 à 6 pots dans les exemples illustrés. Il devra toutefois être compris que l'invention n'est pas limitée à un nombre de pots stocké compris entre 3 et 6.

Le magasin comporte un plateau rond 51, 52 ou 53 dans lequel a été ménagée au moins une encoche radiale 50. Dans les exemples illustrés, les magasins comportent respectivement cinq, trois ou six encoches radiales.

Dans l'exemple montré en figure 10, le plateau 51 peut stocker jusqu'à cinq pots de 4 L.

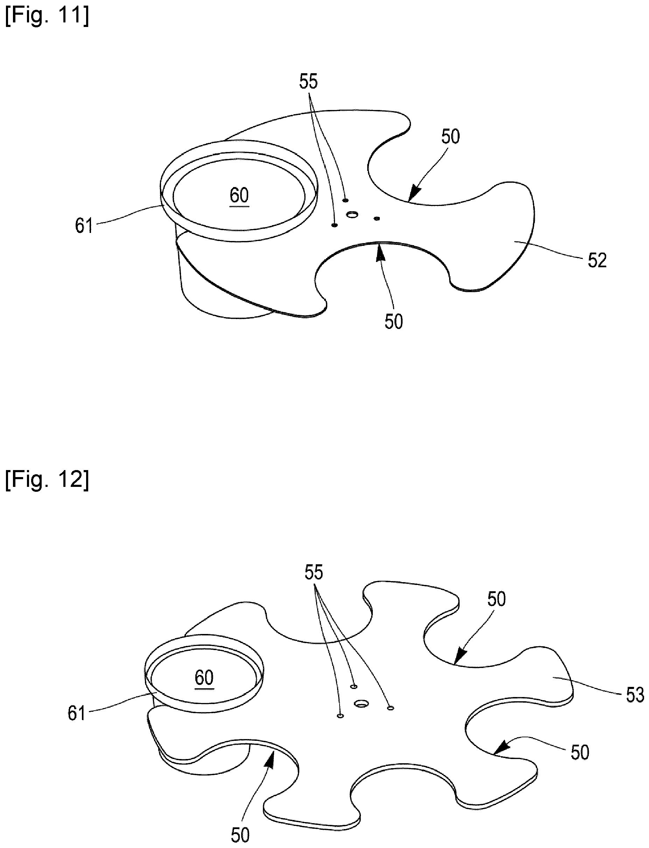

Dans l'exemple montré en figure 11, le plateau 52 peut stocker jusqu'à trois pots de 10 L.

Dans l'exemple montré en figure 13, le plateau peut stocker jusqu'à six pots de 3 L.

Les encoches sont uniformément réparties autour de l'axe du plateau.

Les encoches radiales 50 encerclent solidement les pots 60 (voir figures 11 et 12) : l'encoche vient encercler les pots 60 sous leur collerette 61. Les pots 60 sont ainsi suspendus.

Il pourrait également être prévu que les encoches soient déformables pour que les pots 60 y soient clipsés (engagés à force légèrement).

Le plateau rond 51, 52 ou 53 est monté rotatif autour de son axe. Pour ce faire, le plateau 51, 52 ou 53 est fixé de façon amovible à une platine 54 (voir figure 10) au moyen de vis et d'écrous symbolisés par la référence 55 et la platine 54 est fixée à un arbre de transmission 56 d'un moteur 57.

Grâce à la fixation amovible du plateau, l'utilisateur peut choisir la taille de pots à stocker dans le magasin et leur nombre en changeant le magasin comme il le souhaite.

Pour assurer que les pots 60 soient bien maintenus dans les encoches 50, le dispositif est équipé d'un garde-corps au moins partiellement annulaire 58 : le garde-corps 58 entour le plateau 51, 52 ou 53 sauf sur une portion située devant le châssis 1 du dispositif, au-dessus de l'espace en creux 7 dans lequel évolue les bras 4. De cette façon, le garde-corps 58 ne gêne pas les bras lorsqu'ils lèvent un pot 60 pour l'insérer dans une encoche 50.

La rotation du magasin fonctionne ainsi de concert avec le mouvement des bras : le magasin est entrainé en rotation pour présenter une encoche vide au-dessus de l'espace en creux 7 lors du chargement du dispositif.

Pour décharger le dispositif, c'est l'inverse : le magasin présente une encoche avec pot au-dessus de l'espace en creux 7 pour que les bras 4 viennent saisir le pot 60, le dégager et le reposer au sol.

Par ailleurs, le garde-corps 58 définit une frontière physique autour du plateau du magasin de sorte que, en cas de collision ou de terrain accidenté, les pots 60 soient maintenus dans les encoches. Le garde-corps protège également le plateau rotatif lorsqu'il est vide.

Il va maintenant être fait référence à un mode de fonctionnement du dispositif conforme à l'invention.

L'utilisateur choisit la taille des pots à déplacer d'un endroit à un autre et fixe, dans le magasin, le plateau adéquat.

Il renseigne également le dispositif sur la taille des pots à saisir, correspondant à la taille des encoches du plateau choisi.

Puis il commande le fonctionnement du dispositif conforme à l'invention.

Celui-ci va se déplacer dans une zone géographique prédéterminée et, pour chaque pot qu'il va croiser, il va détecter si le pot est conforme ou non aux renseignements qu'il a reçus.

SI le pot est conforme, les bras 4 vont saisir latéralement le pot et le hisser jusque dans une encoche 50 du plateau du magasin. Après quoi, le magasin va être entrainé en rotation pour placer une encoche vide 50 au-dessus de l'espace en creux 7.

Et ainsi de suite jusqu'à ce que le plateau du magasin soit plein.

Puis, le dispositif conforme à l'invention va se déplacer jusqu'à l'endroit de dépôt qui il aura été indiqué : les bras 4 saisiront un à un les pots stockés dans le magasin 5 pour les déposer un à un au sol, les uns à côté des autres par exemple, jusqu'à ce que le magasin soit vide.

Puis il retournera dans la première zone pour, de nouveau, remplir le magasin.

Et ainsi de suite.

On comprend de ce qui précède comment l'invention permet, avec un seul dispositif, de déplacer des pots pouvant présenter des diamètres différents et en déplacer plusieurs à la fois.

Il devra être entendu que l'invention n'est pas limitée au mode de réalisation spécifiquement décrit ci-avant et illustré sur les figures : en effet, le dispositif pourrait présenter des variantes de réalisation sans sortir du cadre de l'invention.

Par exemple, la forme des pots et des encoches pourrait être différente sans sortir du cadre de l'invention.

## Revendications

1. Dispositif pour déplacer des objets disposés au sol, en particulier des pots (60) pouvant contenir des plantes, ledit dispositif comportant :
- des bras de préhension (4), pour saisir un objet (60), qui sont mobiles entre une position rapprochée pour saisir l'objet (60) latéralement et une position écartée pour libérer ledit objet (60),
- un magasin (5) dans lequel ledit pot (60) saisi est stocké,
- des roues (2) pour assurer le déplacement dudit dispositif,
- un module de détection (3) assurant notamment la détection d'un pot (60) à saisir au sol,
**caractérisé en ce que** les bras de préhension (4) sont montés mobiles en déplacement le long d'un arbre principal (8) sensiblement horizontal, entre ladite position rapprochée et ladite position écartée, et **en ce que** ledit arbre principal (8) est également monté mobile en rotation autour de son axe pour permettre un mouvement de pivot desdits bras de préhension (4) entre une première position pour saisir ledit objet (60) au sol et une second position pour déposer ledit objet (60) dans ledit magasin (5), ledit arbre principal (8) et lesdits bras de préhension (4) étant montés solidaires en rotation.

2. Dispositif selon la revendication 1, **caractérisé en ce que** ledit arbre principal (8) est cannelé et **en ce que** chacun desdits bras de préhension (4) comprend un manchon (9) présentant une forme interne cannelée complémentaire à celle dudit arbre principal (8) cannelé.

3. Dispositif selon l'une quelconque des revendications précédentes, **caractérisé en ce que** chacun des bras de préhension (4) comporte un système à pantographe (40) comprenant une première pièce qui est coudée à chacune de ses extrémités, sensiblement en forme de U, et une seconde pièce qui est coudée à chacune de ses extrémités, sensiblement en forme de U, **en ce que** les première et seconde pièces coudées sont orientées de manière à définir les contours d'un polygone, **en ce que** une extrémité coudée (43) de la première pièce est montée pivotante autour de l'axe dudit arbre principal (8) et **en ce que** l'autre extrémité coudée (42) de ladite première pièce est montée pivotante sur un élément (14) de saisie d'un objet.

4. Dispositif selon la revendication 3, **caractérisé en ce qu'**il comporte un second arbre tubulaire (10), **en ce qu'**une extrémité coudée (45) de la seconde pièce est montée pivotante autour de l'axe dudit second arbre tubulaire (10) et **en ce que** l'autre extrémité coudée (46) de la seconde pièce est montée pivotante sur ledit élément (14) de saisie d'un objet.

5. Dispositif selon la revendication 4, **caractérisé en ce que** ledit arbre principal (8) et ledit second arbre tubulaire (10) sont entourés chacun d'au moins un soufflet de protection (15).

6. Dispositif selon l'une quelconque des revendications précédentes, **caractérisé en ce qu'**il comporte un système (20) à pignon (21) et double crémaillère (22) relié aux bras de préhension (4) au moyen de plaques coudées (12), pour entrainer en déplacement lesdits bras de préhension (4) sur ledit arbre principal (8) de leur position rapprochée à leur position écartée et inversement.

7. Dispositif selon la revendication 6, **caractérisé en ce que** les plaques coudées (12) sont fixées aux extrémités coudées (43, 45) des bras de préhension (4) au moyen de deux bagues de serrage (47), de sorte que chaque plaque coudée (12) soit prise en sandwich entre deux extrémités coudées (43, 45) de bras de préhension (4) et deux bagues de serrage (47) et **en ce que**, pour chaque bras de préhension (4), deux butées à rouleaux (18) sont comprimées entre respectivement une extrémité coudée (43, 45) des bras de préhension (4) et une plaque coudée (12), d'une part, et une plaque coudée (12) et une bague de serrage (47) d'autre part.

8. Dispositif selon l'une quelconque des revendications précédentes, **caractérisé en ce que** ledit magasin (5) comporte un plateau rond (51, 52, 53), monté rotatif autour de son axe, ledit plateau (51, 52, 53) comportant au moins deux encoches radiales.

9. Dispositif selon la revendication 6, **caractérisé en ce que** le magasin (5) comporte en outre un garde-corps (58) au moins partiellement annulaire, entourant ledit plateau rond (51, 52, 53), ledit garde-corps (58) présentant une partie tronquée positionnée au-dessus des bras de préhension (4) du dispositif pour permettre le mouvement de pivot desdits bras de préhension (4).

10. Dispositif selon l'une quelconque des revendications 8 ou 9, **caractérisé en ce que** le plateau (51, 52, 53) est amovible et comporte au moins trois encoches radiales, uniformément réparties autour de l'axe dudit plateau.
